# EUROPÄISCHE PATENTANMELDUNG

(11) **EP 4 312 282 A1**
(43) Veröffentlichungstag der Anmeldung: **31.01.2024**
(21) Anmeldenummer: 23178150.1
(22) Anmeldetag: 08.06.2023
(51) Int. Cl.: H01M 4/00, H01M 4/04, H01M 4/131, H01M 4/1391, H01M 4/21, H01M 4/485, H01M 4/505, H01M 4/525, H01M 4/62

(54) **VERFAHREN ZUR HERSTELLUNG EINER LITHIUMBATTERIE-ELEKTRODE AUS EINEM LITHIUMBATTERIE-ELEKTRODENMATERIAL**

(30) Priorität: 16.06.2022 DE 102022115139
(71) Anmelder: VOLKSWAGEN AG, 38440 Wolfsburg (DE)
(72) Erfinder: Kosfeld, Malte, 38100 Braunschweig (DE); Lehmberg, Annegret, 38122 Braunschweig (DE)
(74) Vertreter: Gulde & Partner

(57) **Zusammenfassung**

Die Erfindung betrifft ein Verfahren zur Herstellung einer Lithiumbatterie-Elektrode aus einem Lithiumbatterie-Elektrodenmaterial, wobei während der Herstellung der Lithiumbatterie-Elektrode der Wassergehalt des Lithiumbatterie-Elektrodenmaterials kontinuierlich oder quasikontinuierlich, kontaktfrei und zerstörungsfrei ermittelt wird, bereitgestellt. Das Verfahren umfasst das kontinuierliche oder quasi-kontinuierliche, kontaktfreie Erfassen eines für einen Wassergehalt des Elektrodenmaterials indikativen Messwerts mit einem Sekundär-Analyseverfahren, wobei das Sekundär-Analyseverfahren die Nahinfrarot-Spektroskopie (NIRS) ist. Danach erfolgt ein Ermitteln des Wassergehalts des Elektrodenmaterials durch Abgleich des erfassten Messwerts mit einer Kalibrationskurve, wobei die Kalibrationskurve den Wassergehalt in Abhängigkeit von dem Messwert angibt und mittels eines Primär-Analyseverfahrens bestimmt wurde.

## Beschreibung

Die Erfindung betrifft ein Verfahren zur Herstellung einer Lithiumbatterie-Elektrode aus einem Lithiumbatterie-Elektrodenmaterial, wobei während der Herstellung der Lithiumbatterie-Elektrode der Wassergehalt des Lithiumbatterie-Elektrodenmaterials kontinuierlich oder quasi-kontinuierlich, kontaktfrei und zerstörungsfrei ermittelt wird.

Eine Lithium-Batterie ist ein Speicher für elektrische Energie auf elektrochemischer Basis. Ein Akkumulator ist eine wieder aufladbare Batterie. Batterien stellen einen wichtigen Baustein unter anderem für die Zukunft batterieelektrischer Fahrzeuge dar. Sie zeichnen sich durch eine hohe Energiedichte und spezifische Energie, eine hohe Zellspannung, eine sehr lange Lagerfähigkeit durch geringe Selbstentladung sowie einen weiten Temperaturbereich für Lagerung und Betrieb aus. Damit kommt ihnen aufgrund ihrer hohen Energiedichte eine wichtige Rolle bei der Realisierung großer Reichweiten für Elektrofahrzeuge zu.

Eine Batterie umfasst zwei Elektroden, zwischen denen sich der Elektrolyt mit freibeweglichen Ladungsträgern befindet und ein Separator, bei dem es sich um eine poröse Membran handelt, die die beiden Elektroden voneinander isoliert. Lithiumbatterien funktionieren, indem einzelne Lithium-Ionen beim Entladen und Laden zwischen den Elektroden hin und her wandern und in den Aktivmaterialien der Elektroden eingelagert werden. Beim Entladen wird Lithium aus der negativen Elektrode, die üblicherweise Kupfer als Stromableiter umfasst, ausgelagert und zeitgleich Elektronen abgegeben. Die Aktivmaterialien der positiven Elektrode einer Lithium-Ionen-Batterie umfassen beispielsweise Mischoxide, wobei in der positiven Elektrode meist Graphite oder amorphe Kohlenstoffverbindungen Verwendung finden. In diesen Materialien wird das Lithium eingelagert. Während des Entladens bewegen sich die Lithium-Ionen von der negativ geladenen Elektrode durch den Elektrolyten und den Separator zur positiv geladenen Elektrode. Zur selben Zeit fließen die Elektronen als der Träger der Elektrizität von der negativ geladenen Elektrode über eine äußere elektrische Verbindung (z. B. eine Kabelverbindung) zur positiv geladenen Elektrode, die üblicherweise Aluminium als Stromableiter umfasst. Beim Laden wird dieser Prozess umgekehrt. In diesem Fall bewegen sich die Lithium-Ionen von der positiv geladenen Elektrode durch den Elektrolyten und den Separator zur negativ geladenen Elektrode. Die Zellformen aus den einzelnen Zellmaterialien umfassen unter anderem zylindrische, prismatische und laminierte Zellformen. In Abhängigkeit ihres Anwendungsfalls werden eine Batteriezelle oder mehrere Zellen verwendet. Für den Fall mehrerer Zellen werden diese in Serie in einem Modul verschaltet. Die geforderte Kapazität bestimmt hierbei darüber, ob mehrere Batteriezellen parallel verschaltet werden. Mehrere verschaltete Module bilden ein Batteriesystem.

Bei der Batterieproduktion müssen in besonderem Maße diverse Kriterien berücksichtigt und Fertigungstoleranzen beachtet werden. Dies gilt auch für den Gehalt an Wasser im Elektrodenmaterial. Das in der Kathode enthaltene Lithium (Li) reagiert mit Wasser zunächst zu LiOH und in Kombination mit CO₂ aus der Umgebungsluft dann zu Li₂CO₃. Durch diese chemische Reaktion geht freies Lithium in dem Kathodenmaterial für den Lade- und Entladeprozess der Zelle verloren. Dieses verlorene Lithium fehlt in dem Kathodenmaterial und somit der Zelle irreversibel und senkt somit die Kapazität der Batterie. Daher sollte bereits während der Produktion der Wassergehalt der Kathode niedrig gehalten werden, um nachhaltige Schädigungen zu vermeiden. Vor allem nickelreiche Materialien, wie das in der Standardfabrik künftig verwendete NMC 811, sind hierfür besonders anfällig, da Nickel vorzugsweise zu Carbonaten und Hydroxiden reagiert. Die Anode wird grundsätzlich im Gegensatz zur Kathode nicht direkt durch Wasser geschädigt. Allerdings bringt das Anodenmaterial anteilig einen überwiegenden Anteil an Feuchtigkeit in die Zelle mit ein, da als Lösemittel für deren Herstellung Wasser verwendet wird. Dieses Wasser kann dann später in der Zelle sowohl mit der Kathode als auch mit dem Elektrolyten reagieren. Daher ist eine möglichst detaillierte Kenntnis über den Wassergehalt der Anode von großem Interesse. Neben der direkten Schädigung des Elektrodenmaterials reagiert in der fertiggestellten Batteriezelle überschüssiges Wasser aus der Anode mit dem Elektrolyten, wodurch sich Fluorwasserstoffsäure (Flusssäure/HF) bilden kann. Daher ist ein niedriger absoluter Feuchtegehalt in der Zelle unbedingt anzustreben. So kommt insbesondere der Herstellung der Elektroden und den dabei auftretenden Gehalten an Wasser im Elektrodenmaterial eine besondere Bedeutung und Relevanz zu.

JP2012164440A2 betrifft ein Verfahren zur Herstellung einer Elektrode einer Bleibatterie und Messung des Wassergehalts der Oberfläche eines pastösen aktiven Materials oder der Oberfläche eines Kleisterpapiers für eine Bleibatterie-Elektrode mittels Infrarotbestrahlung. JP1149364A2 offenbart eine Trocknungsvorrichtung, die in der Lage ist, die Wassermenge in der Paste einer Bleisäure-Elektrodenplatte zu erfassen. Die Trocknungsvorrichtung umfasst einen Trocknungsofen, einen Feuchtigkeitsdetektionssensor zum Messen der Feuchtigkeitsmenge in der Paste der Bleisäure-Elektrodenplatte und ein Temperatursteuerungsmittel für den Trocknungsofen, das mit dem Feuchtigkeitsdetektionssensor verbunden ist.

JP2155163A2 ähnelt grundsätzlich JP1149364A2, wobei zusätzlich die Feuchtigkeitsmenge in der expandierten Bleisäure-Elektrodenplatte durch Sprühen einer geeigneten Wassermenge mit einer Sprühvorrichtung auf einem geeigneten Wert gehalten wird. Als Beispiel für einen Feuchtigkeitsdetektor wird ein Infrarot-Feuchtigkeitsmessgerät verwendet.

Gemäß dem Stand der Technik erfolgen Untersuchungen des Restfeuchtegehaltes während der Herstellung von Lithiumbatterie-Elektroden im Labormaßstab mit Hilfe einer Primär-Analytik, beispielsweise der indirekten coulometrischen Karl-Fischer-Titration (icKFT), statt. Hierbei werden einzelne Proben aus dem Elektrodenmaterial entnommen und innerhalb einer zeitintensiven Bestimmung für eine Dauer von mehreren Minuten analysiert. Die indirekte coulometrische Karl-Fischer-Titration ermöglicht dabei in einem Produktionsprozess aufgrund der zeitintensiven Bestimmung nur eine stichprobenartige Analyse der Restfeuchte des Produktes, wodurch eine kontinuierliche Überwachung der Produktqualität während des Herstellungsprozesses nicht möglich ist. Zudem muss bei der icKFT die Produktion still stehen und es ist ein zerstörendes Analyseverfahren. Es handelt sich also um eine aufwendige Analysemethode, da neben der eigentlichen Analyse für die Probenentnahme das Produktionsband angehalten werden muss. Zudem beinträchtigen aufgrund dieser Form der Wassergehaltbestimmung nicht zu verhindernde hohe Wassergehalte des Elektrodenmaterials die späteren Batteriezellen stark in der Qualität und setzen somit beispielsweise die Kapazität der Batterie im Elektroauto deutlich herab. Alternativ lässt sich dieses Problem nur durch eine Vielzahl von Trocknungsschritten umgehen, die zum einen energieintensiv und zum anderen möglicherweise unnötig sind, da keine genaue Kenntnis über den Wassergehalt vorliegt.

Der Erfindung liegt nun die Aufgabe zugrunde, ein Verfahren bereitzustellen, das die genannten Nachteile des Standes der Technik zumindest teilweise überwindet und eine vorteilhafte Herstellung einer Lithiumbatterie-Elektrode aus einem Lithiumbatterie-Elektrodenmaterial, dessen Wassergehalt währenddessen gemessen wird, ermöglicht.

Diese Aufgabe wird durch ein Verfahren mit den Merkmalen des unabhängigen Anspruchs gelöst. Vorteilhafte Ausgestaltungen der Erfindung sind in den Unteransprüchen definiert.

Erfindungsgemäß wird ein Verfahren zur Herstellung einer Lithiumbatterie-Elektrode aus einem Lithiumbatterie-Elektrodenmaterial, wobei während der Herstellung der Lithiumbatterie-Elektrode der Wassergehalt des Lithiumbatterie-Elektrodenmaterials kontinuierlich oder quasi-kontinuierlich, kontaktfrei und zerstörungsfrei ermittelt wird, bereitgestellt. Das Verfahren umfasst das kontinuierliche oder quasi-kontinuierliche, kontaktfreie Erfassen eines für einen Wassergehalt des Elektrodenmaterials indikativen Messwerts mit einem Sekundär-Analyseverfahren, wobei das Sekundär-Analyseverfahren die Nahinfrarot-Spektroskopie (NIRS) ist. Danach erfolgt ein Ermitteln des Wassergehalts des Elektrodenmaterials durch Abgleich des erfassten Messwerts mit einer Kalibrationskurve, wobei die Kalibrationskurve den Wassergehalt in Abhängigkeit von dem Messwert angibt und mittels eines Primär-Analyseverfahrens bestimmt wurde.

Nachfolgend soll für die vorliegende Erfindung gelten, dass zu den Lithiumbatterien auch Lithiumakkumulatoren hinzuzuzählen sind.

Das kontinuierliche Erfassen ist eine fortlaufende Messung, bei der die Messwerte ununterbrochen angezeigt werden. Streng genommen kann eine solche fortlaufende Messung nur mit analog anzeigenden Messinstrumenten oder Bildschirm-Messgeräten gemessen werden. Dies hängt somit vom eingesetzten NIRS-System ab. Im Falle einer quasikontinuierlichen Messung, die häufig bei digitalen Messungen Anwendung findet, handelt es sich hingegen um eine Erfassung, bei der die Messgröße in periodischen oder aperiodischen Abständen abgetastet und digitalisiert wird. Zwischen den einzelnen Abtastungen liegt immer eine Zeitspanne, in der die Messgröße unbestimmt ist. Vorliegend bedeutet quasi-kontinuierlich eine Zeitspanne, die für eine durchgehende Überwachung der Herstellung der Lithiumbatterie-Elektrode geeignet ist und insbesondere häufiger erfolgt als beispielsweise mit der indirekten coulometrischen Karl-Fischer-Titration.

Der Herstellungsprozess für die Lithiumbatterie-Elektrode umfasst die Schritte Einwaage der Komponenten, Mischen und Dispergieren der Beschichtungsmasse, Beschichtung der "Slurry" auf die Kollektor-Folien, Trocknung der Schicht, Kalandrieren der Elektrode (Kompaktieren) und Schneiden der beschichteten Mutter-Rollen, auch "Slitting" genannt.

Bei der Nahinfrarot-Spektroskopie wird mit einer Strahlungsquelle elektromagnetische Strahlung in einem nahinfraroten Bereich ausgestrahlt, wodurch organische und anorganische Moleküle Strahlung in einem bestimmten Wellenlängenbereich absorbieren und dadurch zur Schwingung angeregt werden. Diese Molekülschwingungen finden in einem Bereich von 780-2500 nm statt. Die analysierbaren Moleküle absorbieren grundsätzlich elektromagnetische Strahlung in mehreren Bereichen, sodass durch eine gemeinsame Betrachtung der Absorbtionsbanden eine eindeutige Zuordnung der analysierten Moleküle möglich ist.

Durch das erfindungsgemäße Verfahren zur Messung des Wassergehalts wird eine einfache Probenvorbereitung ermöglicht. Beispielsweise wird das innerhalb des Verfahrens verwendete NIRS-System oberhalb eines Produktionsbandes, dass das Lithiumbatterie-Elektrodenmaterial führt, angebracht. Das Lithiumbatterie-Elektrodenmaterial selbst wird durch die Nahinfrarot-Spektroskopie nicht beeinflusst und auch eine Bahngeschwindigkeit des Produktionsbandes wird grundsätzlich nicht durch die Nahinfrarot-Spektroskopie eingeschränkt. Somit erfolgt ein kontaktloses- und zerstörungsfreies Messverfahren. Ferner ist durch das erfindungsgemäße Verfahren eine geringe Analytkonzentration im ppm-Bereich, insbesondere einem zwei- bis vierstelligen Bereich, messbar, sodass es möglich ist, die bei Lithiumbatterien auftretenden geringen Anteile von Wasser im Lithiumbatterie-Elektrodenmaterial nachzuweisen und zu messen. Darüber hinaus ist kein Einsatz von Chemikalien notwendig. Für die Kalibrierung bietet sich bevorzugt das Regressionsmodell PLS (Partial Least Squares Regression) für ein robustes Kalibriermodell an. Gegenüber üblichen Verfahren, die auf nicht-kontinuierlicher Messung des Wassergehaltes durch diskrete Messungen beruhen, kann durch die kontinuierliche Kontrolle des Wassergehaltes eine überhöhte Anzahl von Trocknungsschritten, die sonst zur Sicherstellung geringer Wassergehalte pauschal eingesetzt werden, erreicht werden. Auch der Arbeitsaufwand wird bei gleichzeitig gesteigerter Kenntnis über den Wassergehalt verringert. Hierdurch ist grundsätzlich eine verbesserte Prozessüberwachung während der ElektrodenHerstellung möglich. Durch die Kenntnis über den Wassergehalt zu jedem Zeitpunkt kann ein schnelleres Eingreifen bei Prozessstörungen der Trocknungsschritte erfolgen, da diese schneller bemerkt werden. Aufgrund der vorgenannten Eigenschaften ist dementsprechend die Sicherstellung von hoher Produktqualität gewährleistet.

In der Regel wird für die Analytik eine Probe mit unbekanntem Gehalt eines Analyten mit einer Reihe von Kalibrierproben verglichen. Die Kalibrierproben weisen dabei unterschiedliche, aber bekannte Gehalte bzw. Referenzgehalte des Analyten auf. Hierfür werden Kalibrierproben und die Realprobe vermessen. Mittels beispielsweise linearer Regression wird eine Ausgleichsgerade erstellt, mit der die Konzentration des Analyten bestimmt werden kann. Die Nahinfrarot-Spektroskopie ist das Sekundär-Analyseverfahren, das für eine Kalibrierung vor der quantitativen Bestimmung der Moleküle mit einem Primär-Analyseverfahren abgeglichen wird.

Im vorliegenden Fall ist die Verwendung einer Kalibrationskurve notwendig. Diese wird beispielhaft zunächst mit Hilfe des Primär-Analyseverfahrens, zum Beispiel als eine Kalibrationsgerade, bestimmt (einmalig). Hierfür werden beispielhaft Messwerte mit dem Primär-Analyseverfahren, das zur Messung des Wassergehalts des Lithiumbatterie-Elektrodenmaterials ausgebildet ist, erfasst und ausgewertet. Diese ersten Messwerte und deren Auswertung bestimmen den anzunehmenden Wassergehalt bzw. Referenz-Wassergehalt des Lithiumbatterie-Elektrodenmaterials. Die Steuerung bzw. Herstellung eines Elektrodenmaterials, das einen gewünschten bzw. vorgegebenen Wassergehalt aufweist, ist im Realfall nicht möglich, da die auftretenden Wassergehalte einen niedrigen Messbereich umfassen und durch Umwelteinflüsse schwer konstant zu halten sind. Zudem ist die Kalibrierung vom Material sowie dessen Beschaffenheit und dem Messbereich abhängig. Daher wird der Referenzwert mit dem Primär-Analyseverfahren bestimmt und festgelegt. Nachfolgend wird für dieselben Proben des Lithiumbatterie-Elektrodenmaterials eine Messung mit der Nahinfrarot-Spektroskopie durchgeführt. Anhand der erfassten Absorptionsbanden durch die Nahinfrarot-Spektroskopie und deren Auswertung werden durch die Nahinfrarot-Spektroskopie Messwerte bestimmt. Anhand eines Abgleichs der durch das Primär-Analyseverfahren bestimmten Referenz-Wassergehalte des Lithiumbatterie-Elektrodenmaterials und der durch die Nahinfrarot-Spektroskopie bestimmten Messwerte lässt sich eine Kalibrationsgerade bestimmen, wobei die Kalibrationskurve den Wassergehalt in Abhängigkeit von dem Messwert angibt, durch die sich bei durch die Nahinfrarot-Spektroskopie bestimmtem Messwert der tatsächliche Wassergehalt des Lithiumbatterie-Elektrodenmaterials ausrechnen lässt.

In bevorzugter Ausgestaltung der Erfindung ist vorgesehen, dass das Primär-Analyseverfahren eine chemische Analyse, insbesondere indirekte coulometrische Karl-Fischer-Titration, ist. Hierdurch kann in Kombination mit dem Sekundär-Analyseverfahren eine sehr genaue Bestimmung des Wassergehalts erfolgen. Es werden die Vorteile der indirekten coulometrischen Karl-Fischer-Titration mit den Vorteilen der Nahinfrarot-Spektroskopie vereint, und gleichzeitig deren Nachteile in weiten Teilen ausgeschlossen.

Gemäß einer vorteilhaften Ausgestaltung der Erfindung wird in wiederkehrenden Intervallen eine Validierung und Anpassung der Kalibrationskurve mittels des Primär-Analyseverfahrens durchgeführt. Hierdurch wird die Kalibration nachträglich überprüft. Ein Vorteil dieser Vorgehensweise besteht in dem wiederholten Abgleich der Kalibrationskurve, wodurch fehlerhafte Messungen deutlich reduziert werden und die Genauigkeit zunimmt. Im Idealfall reicht eine einmalige Bestimmung einer Kalibrationskurve. Im Realfall ist dies nicht der Fall, da kleinste Schwankungen der Luftfeuchte, der Materialzusammensetzung für die Elektrodenherstellung, Temperaturen und ähnliches Einfluss auf den Wassergehalt und den damit verbundenen Messbereich nehmen und für eine genaue Bestimmung somit die Kalibrationskurve zur Prozessabsicherung überprüft und deren Genauigkeit verbessert wird.

Es kann mit Vorteil vorgesehen sein, dass die Validierung und Anpassung der Kalibrationskurve mindestens in monatlichen Intervallen, insbesondere mindestens in wöchentlichen Intervallen, bevorzugt mindestens in täglichen Intervallen, besonders bevorzugt einmal täglich erfolgt. Durch die Wahl dieser geeigneten Intervalle für die Validierung und Anpassung nach Inbetriebnahme der Elektrodenherstellung erfolgen einzelne Messungen zur Bestimmung des Wassergehaltes mit dem Primär-Analyseverfahren und werden mit entsprechenden Messungen der Nahinfrarot-Spektroskopie abgeglichen. So wird die Kalibrationsgerade wie vorhergehend beschrieben weiter optimiert und präzisiert.

In bevorzugter Ausgestaltung der Erfindung ist vorgesehen, dass das Intervall nach jeder Validierung und Anpassung vergrößert wird. Nach anfänglicher Validierung und Anpassung der Kalibrationskurve nimmt eine weitere Verbesserung der Genauigkeit ab, das heißt, es wird ein Niveau der Genauigkeit erreicht, das durch weitere Messungen kaum merklich gesteigert werden kann, sodass der erweiterte Aufwand zu Beginn des Herstellungsvorgangs noch eine deutliche Verbesserung ermöglicht, mit zunehmender Zeit jedoch nicht mehr gerechtfertigt ist, sodass eine Balance zwischen Verbesserung der Genauigkeit und Aufwand eingestellt wird.

Bevorzugt deckt die Kalibrationskurve einen während der Herstellung einer Lithiumbatterie-Elektrode für das Lithiumbatterie-Elektrodenmaterial zu erwartenden Bereich des Wassergehalts ab. Dadurch erfolgt eine genaue Kalibrierung der Nahinfrarot-Spektroskopie und Abweichungen werden reduziert.

Gemäß einer vorteilhaften Ausgestaltung der Erfindung erfolgt ein Anpassen eines Prozessparameters der Herstellung der Lithiumbatterie-Elektrode aus dem Lithiumbatterie-Elektrodenmaterial in Abhängigkeit des ermittelten Wassergehalts. Dies ermöglicht in Verbindung mit der kontinuierlichen Überwachung der Restfeuchte in dem Elektrodenmaterial einen schnellen Eingriff in den Prozess, da eine Abweichung des idealen Feuchtegehaltes schnell erkannt wird und mittels Anpassung von Prozessparametern korrigiert werden kann. Somit kann beispielsweise beim Trocknungsvorgang weniger Ausschuss durch hohe Feuchtigkeitsgehalte oder eine optimierte Energieeffizienz der Prozesse ermöglicht werden.

Besonders bevorzugt ist der Prozessparameter eine Ofentemperatur eines Trockenofens und/oder eine Verweilzeit des Lithiumbatterie-Elektrodenmaterials auf einer Stromsammlerfolie und/oder eine Bahngeschwindigkeit des Lithiumbatterie-Elektrodenmaterials auf einer Stromsammlerfolie und/oder ein Volumenstrom des Lithiumbatterie-Elektrodenmaterials. Jeder der genannten Parameter übt einen Einfluss auf eine Trocknung bzw. Reduzierung des Wassergehalts des Lithiumbatterie-Elektrodenmaterials aus. In Abhängigkeit des Messorts für die Bestimmung des Wassergehalts des Lithiumbatterie-Elektrodenmaterials in Verbindung mit dem entsprechenden Prozessparameter lässt sich folglich die Reduzierung des Wassergehalts kontrollieren und in geeigneter Weise steuern.

Bevorzugt ist das Sekundär-Analyseverfahren, also die Nahinfrarot-Spektroskopie, ausgebildet, Wassergehalte des Lithiumbatterie-Elektrodenmaterials in einem Messbereich von 20 ppm bis 3000 ppm, zu ermitteln. Übliche Feuchtigkeitsgehalte von Elektrodenmaterial liegen je nach Produktionsprozess für Elektrodenmaterial von Lithiumbatterien bei bis zu 3000 ppm direkt nach der Beschichtung des Lithiumbatterie-Elektrodenmaterials auf eine Stromsammlerfolie und werden durch verschiedene Verfahrensschritte während der Herstellung einer Lithiumbatterie-Elektrode auf bis zu 20 ppm Batteriezellenherstellung reduziert.

In bevorzugter Ausgestaltung der Erfindung ist vorgesehen, dass das Ermitteln des Wassergehalts während und/oder nach verschiedenen Prozessstufen der Herstellung der Lithiumbatterie-Elektrode erfolgt. Dies bedeutet zum einen ein Ermitteln des Wassergehalts auf der Elektrode, das heißt in Form einer ortsaufgelösten Messung an verschiedenen Punkten, und/oder ein Ermitteln des Wassergehalts auf der Fertigungsstraße, das heißt in Form einer zeitaufgelösten Messung an verschiedenen Stationen des Verfahrens. Hierdurch wird eine möglichst genaue und zuverlässige Überwachung des Wassergehaltes des Lithiumbatterie-Elektrodenmaterials gewährleistet.

Gemäß einer vorteilhaften Ausgestaltung der Erfindung erfolgt die Herstellung der Lithiumbatterie-Elektrode in einem kontinuierlichen Rollenprozess und das Ermitteln des Wassergehalts wird während und/oder nach den verschiedenen Prozessstufen zeitgleich durchgeführt. Dies ermöglicht eine genaue Überwachung des Rollenprozesses, der an seinen unterschiedlichen Prozessstufen verschiedenste Temperatur- und Materialeinflüsse sowie mechanische Einflüssen ausübt, die allesamt Einfluss auf den Wassergehalt des Lithiumbatterie-Elektrodenmaterial nehmen können.

Bevorzugt ist vorgesehen, dass das Sekundär-Analyseverfahren ausgebildet ist, jeweils die Wassergehalte des Lithiumbatterie-Elektrodenmaterials in einem an der jeweiligen Prozessstufe zu erwartenden Messbereich zu ermitteln. Hierdurch lassen sich verschiedene Prozessstufen bei der Herstellung von Lithiumbatterie-Elektroden für die Bestimmung des Wassergehalts mit der Nahinfrarot-Spektroskopie mit einem für die jeweilige Prozessstufe geeigneten Bereich eines Wassergehalts, der mit der Nahinfrarot-Spektroskopie gemessen wird, kombinieren. Das heißt mit anderen Worten, dass die Bestimmung mit der Nahinfrarot-Spektroskopie gleichzeitig an unterschiedlichen Prozessstufen erfolgt und vorgesehen ist, dass an unterschiedlichen Prozessstufen unterschiedliche Messbereiche ausgewählt sind. Somit sind dafür mehrere Nahinfrarot-Spektroskopie-Systeme an den jeweiligen Prozessstufen vorzusehen. Dementsprechend ist das ursprüngliche Gesamtintervall des Wassergehalts, das durch einen bevorzugten Bereich von 20 bis 3000 ppm gekennzeichnet ist und das gegebenfalls durch eine einzelne Nahinfrarot-Spektroskopie umfasst sein muss, nun gemäß der bevorzugten Ausgestaltung durch mehrere, zeitgleiche und örtlich voneinander verschiedene Bestimmungen mit der Nahinfrarot-Spektroskopie aufgeteilt. Diese mehrere Bestimmungen können demnach voneinander verschiedene, engere ppm-Bereiche für den Wassergehalt messen. Für jede Prozessstufe bzw. jedes eingesetzte Nahinfrarot-Spektroskopie-System wird eine eigene Kalibrationskurve vorgesehen. Somit kann auch jede Kalibrationskurve über einen engeren Messbereich ermittelt und bestimmt werden, was wiederum die Genauigkeit verbessert, da auch eine Kalibrationskurve eine, wenn auch bereits genaue, Annäherung darstellt. Üblicherweise nimmt im Verlauf der Herstellung der Lithiumbatterie-Elektroden der Wassergehalt des Lithiumbatterie-Elektrodenmaterials an den verschiedenen Prozessstufen ab, sodass demnach vorzugweise die unterschiedlichen Messbereiche des Wassergehalts mit zunehmenden Prozessstufen des Herstellungsprozesse in abnehmenden absoluten ppm-Bereichen liegen.

Gemäß einer weiteren bevorzugten Ausführung erfolgt das Ermitteln des Wassergehalts nach einem Beschichten und Trocknen des Lithiumbatterie-Elektrodenmaterials auf einer Stromsammlerfolie und/oder nach einem Kalandrieren des Lithiumbatterie-Elektrodenmaterials auf einer Stromsammlerfolie und/oder nach einem Schneiden des Lithiumbatterie-Elektrodenmaterials auf einer Stromsammlerfolie. Diese genannten Prozessstufen sind für die Herstellung einer Lithiumbatterie-Elektrode essentielle Prozessschritte, sodass dort eine genaue und kontinuierliche Kenntnis über den entsprechenden Wassergehalt besonders wichtig sind. Nach dem Beschichten und Trocknen gelangt das Lithiumbatterie-Elektrodenmaterial aus dem Beschichtungsvorgang und hat bereits den Trocknungsprozess durchlaufen. Eine Änderung des Wassergehalts kann und soll dementsprechend erfolgt sein. Durch die Kenntnis über die quantitative Änderung lassen sich zum einen Aussagen zur Qualität des Lithiumbatterie-Elektrodenmaterials und zum anderen dem Trocknungsprozess tätigen und eine Prozesskontrolle des Trocknungsprozesses durchführen. Nach dem Kalandrieren hat sich in Versuchen aus der Pilotlinie gezeigt, dass während des Kalandrierens des Lithiumbatterie-Elektrodenmaterials speziell durch die Rollenführung Wasser in das Lithiumbatterie-Elektrodenmaterial eingebracht wird. Somit kann das Ausmaß dieses Wassereintrags überwacht werden und es können, falls notwendig, Maßnahmen ergriffen werden. Nach dem Schneiden, das die letzte Prozessstufe der Herstellung darstellt und somit dort eine letzte Produktkontrolle des Lithiumbatterie-Elektrodenmaterials erfolgen kann, ist es essentiell, einen niedrigen Wassergehalt des Lithiumbatterie-Elektrodenmaterials sicherzustellen und Qualitätseinbußen der Batteriezelle zu vermeiden. Denn nach dem Schneiden gelangt die fertige Lithiumbatterie-Elektrode in den Stapelprozess für die Fertigung der Batteriezelle.

Besonders bevorzugt ist das Sekundär-Analyseverfahren ausgebildet, Wassergehalte des Lithiumbatterie-Elektrodenmaterials, wobei die Elektrode eine Anode ist, nach dem Beschichten und Trocknen in einem Messbereich von 500 ppm bis 3000 ppm, nach dem Kalandrieren in einem Messbereich von 200 ppm bis 2000 ppm und nach dem Schneiden in einem Messbereich von 50 ppm bis 1500 ppm zu ermitteln. Übliche Wassergehalte des Lithiumbatterie-Elektrodenmaterials liegen dabei je nach Produktionsprozess für Elektrodenmaterial von Lithiumionen-Batterien bei bis zu 3000 ppm direkt nach der Beschichtung und werden durch verschiedenste Verfahrensschritte auf bis zu 20 ppm Batteriezellenherstellung reduziert.

Besonders bevorzugt ist das Sekundär-Analyseverfahren ausgebildet, Wassergehalte des Lithiumbatterie-Elektrodenmaterials, wobei die Elektrode eine Kathode ist, nach dem Beschichten und Trocknen in einem Messbereich von 20 ppm bis 1000 ppm, nach dem Kalandrieren in einem Messbereich von 20 ppm bis 1000 ppm und nach dem Schneiden in einem Messbereich von 20 ppm bis 500 ppm zu ermitteln. Übliche Wassergehalte des Lithiumbatterie-Elektrodenmaterials liegen dabei je nach Produktionsprozess für Elektrodenmaterial von Lithiumionen-Batterien bei bis zu 3000 ppm direkt nach der Beschichtung und werden durch verschiedenste Verfahrensschritte auf bis zu 20 ppm Batteriezellenherstellung reduziert.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in einem Ausführungsbeispiel anhand der zugehörigen Zeichnung erläutert. Es zeigt:

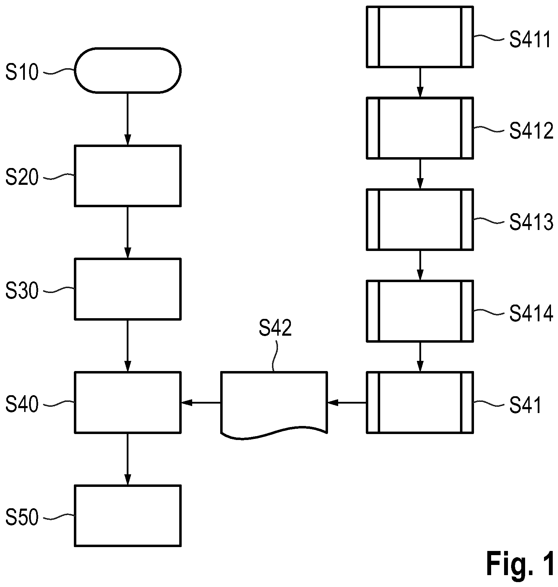

- Figur 1: einen Ablaufplan eines erfindungsgemäßen Verfahrens zur kontinuierlichen Messung des Wassergehalts eines Lithiumbatterie-Elektrodenmaterials während der Herstellung einer Lithiumbatterie-Elektrode.

Nachfolgend wird anhand von Figur 1 ein erfindungsgemäßes Verfahren zur kontinuierlichen Messung des Wassergehalts eines Lithiumbatterie-Elektrodenmaterials während der Herstellung einer Lithiumbatterie-Elektrode erläutert. In Figur 1 wird ein Ablaufplan des Verfahrens gezeigt.

Das Verfahren startet mit Schritt S10. Hierbei handelt es sich um den Ausgangspunkt für das erfindungsgemäße Verfahren, der eine Prozessstufe der Herstellung einer Lithiumbatterie-Elektrode umfasst. Bevorzugt ist dies insbesondere nach einem Beschichten und Trocknen des Lithiumbatterie-Elektrodenmaterials auf einer Stromsammlerfolie und/oder nach einem Kalandrieren des Lithiumbatterie-Elektrodenmaterials auf einer Stromsammlerfolie und/oder nach einem Schneiden des Lithiumbatterie-Elektrodenmaterials auf einer Stromsammlerfolie. Besonders bevorzugt erfolgt die Bestimmung mit der Nahinfrarot-Spektroskopie sogar gleichzeitig an mehreren der vorhergenannten Prozessstufen. Beispielsweise wird das innerhalb des Verfahrens verwendete NIRS-System oberhalb eines Produktionsbandes, das das Lithiumbatterie-Elektrodenmaterial führt, angebracht.

Danach wird in Schritt S20 ein Messignal x_{NIRS,i} (mit i = 1, 2, 3 ... n) mittels dem Sekundär-Analyseverfahren erfasst, wobei das Sekundär-Analyseverfahren die Nahinfrarot-Spektroskopie ist und durch ein NIRS-System realisiert wird. Innerhalb der Nahinfrarot-Spektroskopie wird im folgenden Schritt S30 ausgehend von dem Messignal x_{NIRS,i} ein für einen Wassergehalt des Elektrodenmaterials indikativer Messwerte y_{NIRS,i} erfasst. Hierbei handelt es sich um einen noch unkalibrierten Messwert y_{NIRS,i}.

Daher erfolgt in Schritt S40 der Abgleich des erfassten Messwerts y_{NIRS,i} mit der Kalibrationsgerade. Dafür wird der erfasste Messwert y_{NIRS,i} mit einer zumindest einmalig bestimmten Kalibrationskurve, die gemäß der vorliegenden Ausführung eine Kalibrationsgerade darstellt, abgeglichen. Das heißt mit anderen Worten anhand der Kalibrationsgerade wird der erfasste Messwert y_{NIRS,i} umgerechnet.

Bezüglich der hier beschriebenen Ausführung des erfindungsgemäßen Verfahrens wird in den Schritten S41 und S42 sowie deren Unterschritten S411 bis S414 das Bestimmen einer Kalibrationsgeraden für das Sekundär-Analyseverfahren mittels dem Primär-Analyseverfahren durchgeführt. Es ist darauf hinzuweisen, dass dies nicht als zeitliche Abfolge zu verstehen ist, die kontinuierlich bei der Herstellung erfolgt. Das heißt mit anderen Worten, dass die Bestimmung der Kalibrationsgerade vorliegend nicht erst während des erfindungsgemäßen Verfahrens nach Beginn der Lithiumbatterie-Elektrodenherstellung erfolgt. Die Kalibrationsgerade wurde bereits zumindest einmalig vor Beginn der Herstellung der Elektrodenherstellung ermittelt, sodass sie nun für eine Verwendung zur Kalibrierung bzw. dem Abgleich zur Verfügung steht. Dennoch zeigen die genannten Schritte den grundsätzlichen Ablauf, der für diese beispielhafte Bestimmung der Kalibrationsgeraden notwendig ist. Ferner wird die Kalibrationsgerade bevorzugt zusätzlich bei der Herstellung der Elektroden überprüft, indem weitere Messungen mittels des Primär-Analyseverfahrens erfolgen und ein erneuter Abgleich mit den durch das Sekundär-Analyseverfahren ermittelten Messwerten erfolgt. Demnach wird zu festgelegten und geeigneten Intervallen der Verfahrenspfad von S411 bis S413, danach über S41 und schließlich S42 bei der Herstellung der Elektroden zu diskreten Zeitpunkten wiederholt durchgeführt. Die Bestimmung der Kalibrationsgeraden erfolgt beispielhaft durch das Erfassen von Messwerten y_{icKFT,i} in Schritt S412 durch Auswerten von Messsignalen x_{icKFT,i} in einem Primär-Analyseverfahren zur Messung des Wassergehalts des Lithiumbatterie-Elektrodenmaterials, wobei die Messsignale x_{icKFT,i} in Schritt S411 erfasst wurden. Vorliegend handelt es sich bei dem Primär-Analyseverfahren um die indirekte coulometrische Karl-Fischer-Titration. Dafür wird eine Probe des Lithiumbatterie-Elektrodenmaterials entnommen und einer Analyse mit dem Primär-Analyseverfahren unterzogen. Dabei bestimmen die in dem Schritt S412 bestimmten Messwerte bzw. Wassergehalte y_{icKFT,i} den anzunehmenden Wassergehalt bzw. Referenz-Wassergehalt des Lithiumbatterie-Elektrodenmaterials. Für dieselben zuvor analysierten Proben des Lithiumbatterie-Elektrodenmaterials wird eine Messung mittels der Nahinfrarot-Spektroskopie in Schritt S413 durchgeführt. Dabei werden deren Absorptionsbanden durch die Nahinfrarot-Spektroskopie erfasst, die die Messsignale x_{Kalib,i} liefern. Anhand deren Auswertungen werden durch die Nahinfrarot-Spektroskopie unkalibrierte Messwerte y_{Kalib,i} in Schritt S414 bestimmt.

Anhand eines Abgleichs der durch das Primär-Analyseverfahren bestimmten Referenz-Wassergehalte y_{icKFT,i} des Lithiumbatterie-Elektrodenmaterials und der durch die Nahinfrarot-Spektroskopie bestimmten unkalibrierten Messwerte y_{Kalib,i} in Schritt S41 lässt sich eine Kalibrationsgerade bestimmen, mittels derer sich anhand eines mittels Nahinfrarot-Spektroskopie bestimmten unkalibrierten Messwerts des Lithiumbatterie-Elektrodenmaterials der tatsächliche Wassergehalt ausrechnen lässt.

In Schritt S42 steht folglich bereits zu Beginn des Verfahrens eine Kalibrationsgerade innerhalb des Nahinfrarot-Spektroskopie-Systems zur Verfügung, die bei Bedarf validiert und angepasst wird.

Als Resultat des Abgleichs in Schritt S40 liegt dann in Schritt S50 der zu erfassende Wassergehalt des Lithiumbatterie-Elektrodenmaterials während der Herstellung einer Lithiumbatterie-Elektrode aus dem Lithiumbatterie-Elektrodenmaterial an der entsprechenden Prozessstufe des Prozesses vor.

### Bezugszeichenliste

- S10: Prozessstufe der Herstellung einer Lithiumbatterie-Elektrode
- S20: Erfassen von Messsignalen x_{NIRS,i}
- S30: Erfassen der Messwerte y_{NIRS,i}
- S40: Abgleich der Messwerte y_{NIRS,i}
- S411: Erfassen von Messsignalen x_{icKFT,i}
- S412: Bestimmen der Referenz-Wassergehalte y_{icKFT,i}
- S413: Erfassen von Messsignalen x_{Kalib,i}
- S414: Bestimmen unkalibrierter Messwerte y_{Kalib,i}
- S41: Abgleich von y_{Kalib,i} und y_{icKFT,i}.
- S42: Kalibrationsgerade
- S50: Wassergehalt des Lithiumbatterie-Elektrodenmaterials

## Patentansprüche

1. Verfahren zur Herstellung einer Lithiumbatterie-Elektrode aus einem Lithiumbatterie-Elektrodenmaterial, wobei während der Herstellung der Lithiumbatterie-Elektrode der Wassergehalt des Lithiumbatterie-Elektrodenmaterials kontinuierlich oder quasi-kontinuierlich, kontaktfrei und zerstörungsfrei ermittelt wird, umfassend folgende Schritte:
kontinuierliches oder quasi-kontinuierliches, kontaktfreies Erfassen eines für einen Wassergehalt des Elektrodenmaterials indikativen Messwerts mit einem Sekundär-Analyseverfahren, wobei das Sekundär-Analyseverfahren die Nahinfrarot-Spektroskopie (NIRS) ist, und
Ermitteln des Wassergehalts des Elektrodenmaterials durch Abgleich des erfassten Messwerts mit einer Kalibrationskurve, wobei die Kalibrationskurve den Wassergehalt in Abhängigkeit von dem Messwert angibt und mittels eines Primär-Analyseverfahrens bestimmt wurde.

2. Verfahren nach einem der vorhergehenden Ansprüche, **dadurch gekennzeichnet, dass** das Primär-Analyseverfahren eine chemische Analyse, insbesondere indirekte coulometrische Karl-Fischer-Titration, ist.

3. Verfahren nach einem der vorhergehenden Ansprüche, **dadurch gekennzeichnet, dass** in wiederkehrenden Intervallen eine Validierung und Anpassung der Kalibrationskurve mittels des Primär-Analyseverfahrens durchgeführt wird.

4. Verfahren nach Anspruch 3, **dadurch gekennzeichnet, dass** die Validierung und Anpassung der Kalibrationskurve mindestens in monatlichen Intervallen, insbesondere mindestens in wöchentlichen Intervallen, bevorzugt mindestens in täglichen Intervallen, besonders bevorzugt einmal täglich erfolgt.

5. Verfahren nach Anspruch 3 oder 4, **dadurch gekennzeichnet, dass** das Intervall nach jeder Validierung und Anpassung vergrößert wird.

6. Verfahren nach einem der vorhergehenden Ansprüche, **dadurch gekennzeichnet, dass** die Kalibrationskurve einen während der Herstellung einer Lithiumbatterie-Elektrode für das Lithiumbatterie-Elektrodenmaterial zu erwartenden Bereich des Wassergehalts abdeckt.

7. Verfahren nach einem der vorhergehenden Ansprüche, **dadurch gekennzeichnet, dass** ein Anpassen eines Prozessparameters der Herstellung der Lithiumbatterie-Elektrode in Abhängigkeit des ermittelten Wassergehalts durchgeführt wird.

8. Verfahren nach Anspruch 7, **dadurch gekennzeichnet, dass** der Prozessparameter eine Ofentemperatur eines Trockenofens und/oder eine Verweilzeit des Lithiumbatterie-Elektrodenmaterials auf einer Stromsammlerfolie und/oder eine Bahngeschwindigkeit des Lithiumbatterie-Elektrodenmaterials auf einer Stromsammlerfolie und/oder ein Volumenstrom des Lithiumbatterie-Elektrodenmaterials ist.

9. Verfahren nach einem der vorhergehenden Ansprüche, **dadurch gekennzeichnet, dass** das Sekundär-Analyseverfahren ausgebildet ist, Wassergehalte des Lithiumbatterie-Elektrodenmaterials in einem Messbereich von 20 ppm bis 3000 ppm zu ermitteln.

10. Verfahren nach einem der vorhergehenden Ansprüche, **dadurch gekennzeichnet, dass** das Ermitteln des Wassergehalts während und/oder nach verschiedenen Prozessstufen der Herstellung der Lithiumbatterie-Elektrode durchgeführt wird.

11. Verfahren nach Anspruch 10, dass die Herstellung der Lithiumbatterie-Elektrode in einem kontinuierlichen Rollenprozess erfolgt und das Ermitteln des Wassergehalts während und/oder nach den verschiedenen Prozessstufen zeitgleich durchgeführt wird.

12. Verfahren nach Anspruch 10 oder 11, **dadurch gekennzeichnet, dass** das Sekundär-Analyseverfahren ausgebildet ist, jeweils die Wassergehalte des Lithiumbatterie-Elektrodenmaterials in einem an der jeweiligen Prozessstufe zu erwartenden Messbereich zu ermitteln.

13. Verfahren nach einem der vorhergehenden Ansprüche, **dadurch gekennzeichnet, dass** das Ermitteln des Wassergehalts nach einem Beschichten und Trocknen des Lithiumbatterie-Elektrodenmaterials auf einer Stromsammlerfolie und/oder nach einem Kalandrieren des Lithiumbatterie-Elektrodenmaterials auf der Stromsammlerfolie und/oder nach einem Schneiden der mit dem Lithiumbatterie-Elektrodenmaterial beschichteten Stromsammlerfolie erfolgt.

14. Verfahren nach den Ansprüchen 12 und 13, **dadurch gekennzeichnet, dass** das Sekundär-Analyseverfahren ausgebildet ist, Wassergehalte des Lithiumbatterie-Elektrodenmaterials, wobei die Elektrode eine Anode ist, nach dem Beschichten und Trocknen in einem Messbereich von 500 ppm bis 3000 ppm, nach dem Kalandrieren in einem Messbereich von 200 ppm bis 2000 ppm und nach dem Schneiden in einem Messbereich von 50 ppm bis 1500 ppm zu ermitteln.

15. Verfahren nach den Ansprüchen 12 und 13, **dadurch gekennzeichnet, dass** das Sekundär-Analyseverfahren ausgebildet ist, Wassergehalte des Lithiumbatterie-Elektrodenmaterials, wobei die Elektrode eine Kathode ist, nach dem Beschichten und Trocknen in einem Messbereich von 20 ppm bis 1000 ppm, nach dem Kalandrieren in einem Messbereich von 20 ppm bis 1000 ppm und nach dem Schneiden in einem Messbereich von 20 ppm bis 500 ppm zu ermitteln.
